# EUROPEAN PATENT SPECIFICATION

(11) **EP 1 588 360 B1**
(45) Date of publication and mention of the grant of the patent: **05.09.2018**
(21) Application number: 04703657.9
(22) Date of filing: 20.01.2004
(51) Int. Cl.: G06F 3/06

(54) **SYSTEM AND METHOD FOR DISTRIBUTED BLOCK LEVEL STORAGE**
DATENSPEICHERSYSTEME
SYSTEMES DE MISE EN MEMOIRE

(30) Priority: 20.01.2003 US 347898; 20.01.2003 US 347901; 21.01.2003 US 441810 P
(43) Date of publication of application: 26.10.2005
(60) Divisional application: 10180781.6
(73) Proprietor: Dell Products, L.P., Round Rock, TX 78682 (US)
(72) Inventor: KONING, Paul G., New Boston, NH 03070 (US); HAYDEN, Peter C., Mount Vernon, NH 03057 (US); LONG, Paula, Hollis, NH 03049 (US); GILLUM, Kirtley C., Hudson, NH 03051 (US); SUMAN, Daniel E., Westford, MA 01886 (US); SCHOTT, Eric R., Nashua, NH 03063 (US)
(74) Representative: FRKelly
(86) International application number: PCT/US2004/001432
(87) International publication number: WO 2004/066277

(56) References cited:
- US-B1- 6 314 503
- SCHEUERMANN P, WEIKUM G, ZABBACK P: "DATA PARTITIONING AND LOAD BALANCING IN PARALLEL DISK SYSTEMS" TECHNICAL REPORT A/02/96 UNIVERSITY OF SAARALND, April 1996 (1996-04), pages 1-48, XP002329842 Retrieved from the Internet: URL:ftp://cs.uni-sb.de/pub/techreports/FB1 4/fb14-96-02.ps.gz>
- HARTMAN J H ET AL: "THE ZEBRA STRIPED NETWORK FILE SYSTEM" OPERATING SYSTEMS REVIEW (SIGOPS), ACM HEADQUARTER. NEW YORK, US, vol. 27, no. 5, 1 December 1993 (1993-12-01), pages 29-43, XP000418681
- WEI LIU ET AL: "Design of an I/O balancing file system on web server clusters" PARALLEL PROCESSING, 2000. PROCEEDINGS. 2000 INTERNATIONAL WORKSHOPS ON 21-24 AUGUST 2000, PISCATAWAY, NJ, USA,IEEE, 21 August 2000 (2000-08-21), pages 119-125, XP010511941 ISBN: 0-7695-0771-9
- ANDERSON T E AT AL: "Serverless Network File Systems" AWARD PAPER IN PROC. FIFTEENTH SYMPOSIUM ON OPERATING SYSTEMS PRINCIPLES, 1995, pages 1-34, XP002329843 Retrieved from the Internet: URL:http://now.cs.berkeley.edu/Papers/Pape rs/sosp95.ps>

## Description

### FIELD OF THE INVENTION

The invention relates to data storage and in particular to data storage systems and services that store data across a plurality of servers.

### BACKGROUND OF THE INVENTION

As companies rely more and more on e-commerce, online transaction processing, and databases, the amount of information that needs to be managed and stored can intimidate even the most seasoned of network managers.

While servers do a good job of storing data, their capacity is limited, and they can become a bottleneck if too many users try to access the same information. Instead, most companies rely on peripheral storage devices such as tape libraries, RAID disks, and even optical storage systems. These storage devices are effective for backing up data online and storing large amounts of information. By hanging a number of such devices off of a server, a network administrator can create a server farm that can store a substantial amount of data for the enterprise.

Sophisticated storage technologies, such as RAID, provide differentiated classes of storage. These storage classes may differ in regard to performance, reliability, error detection and other factors. The different storage classes allow the system administrator to store different types of data with different classes of storage.

Although existing systems can work quite well, they generally employ separate storage devices for each class of service. Thus, one storage device can be set to a certain level of performance, such as RAID Level 0, and this device (or devices) can store the appropriate data, such as Photoshop temporary files. Thus, these systems require dedicated devices for the different classes of storage.

As server farms increase in size, and as companies rely more heavily on data-intensive applications such as multimedia, this traditional storage model is not quite as useful. This is because access to these peripheral devices can be slow, and it might not always be possible for every user to easily and transparently access each storage device.

Recently, a number of vendors have been developing Storage Area Network (SAN). SANs provide more options for network storage, including much faster access than the peripheral devices that operate as Network Attached Storage (NAS) and SANs further provide flexibility to create separate networks to handle large volumes of data.

A SAN is a high-speed special-purpose network or subnetwork that interconnects different kinds of data storage devices with associated data servers on behalf of a larger network of users. Typically, a storage area network is part of the overall network of computing resources for an enterprise. A SAN is usually clustered in close proximity to other computing resources such as IBM S/390 mainframes but may also extend to remote locations for backup and archival storage, using wide area network carrier technologies such as ATM or Synchronous Optical Networks. A SAN can use existing communication technology such as optical fiber ESCON or Fibre Channel technology.

SANs support disk mirroring, backup and restore, archival and retrieval of archived data, data migration from one storage device to another, and the sharing of data among different servers in a network. SANs can incorporate subnetworks with network-attached storage systems.

Although SANs hold much promise, they face a significant challenge. Bluntly, consumers expect a lot of their data storage systems. Specifically, consumers demand that SANs provide network type scalability, service and flexibility, while at the same time providing data access at speeds that compete with server farms. This can be quite a challenge, particularly in environments where the dynamics of client data usage vary greatly and tend to change over time. For example, the speed at which a storage system can respond to a client demand, depends at least in part on the resources available on the server that is processing the request. However, client requests for data can be bursty and can tend to request certain portions of the stored data much more frequently than some of the other data. Moreover, client requests can follow patterns where certain portions of the stored data are commonly, although not always, requested along with other portions of the stored data.

In enterprise storage systems, different techniques have been developed to deal with the fact that certain portions of the stored data are requested more frequently than other portions. Further, striping techniques have been developed to allow enterprise storage systems to form patterns of data blocks that are more efficiently read from the disk storage devices. However, these techniques are readily implemented on the typical enterprise storage system by modifying the gateway or switch to monitor client requests and control how data is stored on the underlying storage media. For storage area networks such techniques can also be employed, however they force the SAN to use a gateway or switch architecture, and this can reduce the speed at which client requests can be performed.

Another approach is "storage virtualization" where an intermediary device is placed between the client and the servers, with the intermediary device providing the request routing. None of the servers is hereby aware that it is providing only a portion of the entire partitioned service. Adding the intermediary device adds complexity to the system.

US 6,314,503 discloses managing data storage in a computer system including a host computer and a storage system that stores data accessed by the host computer. A performance condition that impacts system performance is detected, and in response thereto, the data within the storage system is reconfigured. The detected performance conditions include: logic volumes that include hot spots that are larger than the cache storage dedicated to the volume, data segments that are accessed frequently by the host but not sufficiently frequently so that they remain in the cache between accesses, and large data segments that are frequently and sequentially accessed by the host and are stored on the same physical device within the storage system.

It remains desirable to allow a client to contact any server in a multi-server environment and to access resources distributed with a reduced reliance on an intermediary device or server. It would also be desirable to provide a method and system that allows storage are network to control how data is stored and managed on the systems without requiring a gateway to monitor all incoming request traffic. It would be furthermore desirable to provide storage systems with differentiated classes of storage without requiring class-dedicated storage devices.

### SUMMARY OF THE INVENTION

According to the present invention there is provided a system for block level data storage according to claim 1.

Systems and methods described herein include systems for providing a block level data storage service. More particularly, the systems and methods of the invention provide a block level data storage service that may be employed with a server system that partitions the block storage service across a plurality of equivalent servers. A system of equivalents servers will be understood to encompass, but not be limited to, systems comprised of a plurality of equivalent servers wherein each of the equivalent servers presents a similar interface to a client and each equivalent server presents the same response to the same request from the client. The systems and methods described herein may be applied to different applications and are not limited to any particular application, however, for the purpose of clarity, the systems and methods described herein will be described with reference to a block level data storage application wherein a plurality of data blocks are stored on a block data volume that is partitioned across a plurality of storage devices with different portions of the data volume being associated with different equivalent servers on the system.

As further described herein, the server system optionally employs an adaptive storage block data distribution process for distributing blocks of data across the different partitions of the data volume. To this end, each equivalent server includes a routing table, a data mover process and a request monitor process. The request monitor process is capable of monitoring requests made to the server from the one or more clients that are accessing the system. The request may be associated with data blocks stored on a partition or somewhere on the volume. The request monitor can monitor the different requests that clients make to the associated server. Additionally, the request monitor may communicate with other request monitor processes running on the different equivalent servers on the system. In this way, the request monitor can generate a global view of the requests being forwarded by clients to the partitioned block data storage system. By sharing this information, each equivalent server may, through its associated request monitor process, develop a global understanding of the requests being serviced by the block data storage system.

Once this global understanding of the request traffic being handled by the block data storage system is developed, each equivalent server may then employ its data mover process to move data blocks, or the responsibility for different data blocks, from one server to another different server. In one embodiment, each data mover process employs the global request data to determine distributions of data blocks that provide for more efficient service to a requesting client, more efficient allocation of resources, or in some other way improves the performance, reliability, or some other characteristic of the block data storage system.

In one particular embodiment, each data mover process is capable of communicating with another data mover process for the purpose of allowing the data mover processes of different servers to communicate when data blocks are being moved from one server to another different server. For example, in one embodiment, for the purpose of increasing reliability of data transfer, the data mover processes on the different equivalent servers can employ a transaction mechanism that monitors the transfer of data blocks from one server to the other and verifies when the block data transfer is complete and whether or not the entire transfer was successful.

To maintain an understanding of the location of the different data blocks across the different partitions of a volume and across the different volumes maintained by the data block storage system, each equivalent server maintains a routing table. To this end, each equivalent server includes a routing table process that tracks the different data blocks being stored on the block data storage system and the particular equivalent server that is responsible for each data block. In one embodiment, the routing table processes of the equivalent servers are capable of communicating with each other for the purpose of having each equivalent server maintain a routing table that provides a complete, system-wide database of the different data blocks maintained by the block data storage system and the equivalent servers that are associated with these different data blocks.

In accordance with this practice of the invention, the invention provides, *inter alia,* methods, computer program products, and systems for allowing a plurality of servers to provide coherent support for incoming requests for services or resources. To this end, the systems and methods described herein distribute, organize and maintain resources across a plurality of services. In one preferred embodiment, the servers are truly equivalent in that they each can respond to an incoming request in the same manner. Thus, each server appears equivalent to clients that are requesting access to resources maintained on the system.

In one embodiment, the routing tables also store group membership information indicating the groups to which a server is a member. The routing table may be updated as necessary to reflect changes in group membership due to additions, removals, or temporary unavailability of the various servers that make up the group. When changes have propagated through the server group, all relevant routing tables at each server will contain identical information.

When a server receives a resource request, it uses the relevant routing table to identify which group member should actually hold the resource object or a part of the resource object. The request may then be serviced by laterally accessing the desired data object from the correct server without making expensive query-response transactions over the network.

In onother practice of the invention, a process responds to client requests by detecting a request from a client for access to a resource and by establishing a connection for communicating with the client. The process then identifies a server available for servicing the detected request, and determines whether state information is associated with the connection. The process then grants the identified server access to the state information and allows the identified server to create and transmit a response to the client, also allowing the identified server to update the state information.

In another practice of the invention, a system provides services over a data network, wherein the system includes a process for detecting a request from a client for access to a resource and for establishing a communication connection with the client, a server identification process for identifying, a server associated with the requested resource, a request router for forwarding the detected request to an identified server, and a socket server for allowing distributed access to state information associated with the communication connection, whereby the identified server may access the state information for responding to the client.

According to yet another practice of the invention, a server for access to a distributed service over a data network includes a listening thread for detecting a request from a client for access to a service and for establishing a communication connection with the client, wherein the communication connection has state information associated therewith. The server further includes a resource management process for maintaining a list of available servers capable of servicing the detected request, a request router for forwarding the detected request to an identified server, and a connection data server for allowing distributed access to state information associated with the communication connection, whereby the identified server may access the state information for responding to the client.

According to another practice of the invention, a socket server is provided for allowing a plurality of servers supporting a partitioned resource to respond to a detected request from a client includes a file process, responsive to the detected request, for creating a data file associated with a communication channel opened for communicating with the client and for maintaining state information, a control process for detecting requests from the plurality of servers to access the data file and for controlling access to the data file to grant at least one of the plurality of servers access to the state information, and a file write process for allowing one of the plurality of servers to update the state information stored in the created file.

Additional embodiments of the invention may include one or more of the following features. The state information may be stored in a memory. An interlock process may be used to control access to a file containing the state information, and the identified server may update the state information by writing to a file. The interlock process may limit access to the file containing the state information to one server at a time and may include a listening thread for detecting requests from a client, for example, to a distributed service. The communication connection may be implemented as a HTTP, FTP, iSCSI, NFS and/or CIFS communication protocol. The state information may include IP addresses, TCP sequence numbers and/or iSCSI sequence numbers, and may be associated with layers in a network stack.

In another yet practice of the invention, a block level data storage service provides differentiated pools of storage on a single storage device. To this end, the systems and methods described herein leverage the different performance characteristics across the logical block name (LBN) space of the storage device (or devices). These different performance characteristics may be exploited to support two or more classes of storage on a single device.

More particularly, the systems and methods described herein include, in one aspect, systems for providing differentiated classes of storage. Such systems may comprise a storage device having a plurality of storage locations and a logical block name space for organizing the storage locations. A performance process may partition the storage locations into a plurality of regions that provide different levels of performance, and a mapping process may map the partitioned portions of the storage locations to a selected section of the logical block name space.

In certain embodiments, the performance process separates the plurality of storage locations into a plurality of categories being associated with a different level of service, which for example may be associated with a different RAID level of performance. However, those of skill in the art will know that other types of differentiated storage, other than RAID, may be employed, including storage systems that distinguish between media employed, cost and other features or parameters. Moreover, in some embodiments the underlying storage device is a single storage medium, although optionally, the mapping process may create multiple storage volumes at a selected level of performance, and the multiple storage volumes may be associated with one or more storage devices.

Optionally, the system may further comprise a load balancing mover process for moving data between different portions of the logical block name space. The load balancing mover process may include an adaptive data placement process for moving data between storage pools to thereby improve system performance. Further, an admin process may allow an administrator to move data between different storage pools. These systems may move, store and access data blocks and to this end may move data blocks that are organized as files, including files having a directory structure and hierarchy to provide a file system service. In alternate embodiments, the systems may include a process for providing a storage volume service.

In another embodiment, the systems provide storage systems supporting differentiated classes of storage. Such systems can include a storage device having a plurality of storage locations, a logical block name space for organizing the storage locations, and performance parameters of the storage locations that vary across the storage device. The system may further include a partitioning process for partitioning those storage locations into regions as a function variations in performance parameters. The partitioning process may select a fixed set of partitions as a function of a selected configuration of system components. Further, a performance process may associate partitions with different levels of performance, and a mapping process may map the identified partitions of the storage locations to a selected section of the logical block name space.

The systems and methods described herein may be realized in many different forms, including as part of a RAID controller, device driver, operating system, application program, or network service. In one particular embodiment the system is realized as a storage area network, that includes one or more servers executing computer code that configures the server, at least in part, to carry out the processes that provide storage systems supporting differentiated classes of storage.

In another aspect, the invention provides a process for providing differentiated classes of storage. Such methods may comprise the steps of providing one or more storage devices having a plurality of storage locations and a logical block name space for organizing the storage locations. The process may partition the storage locations into a plurality of regions providing different levels of performance, and may map the partitioned portions of the storage locations to a selected section of the logical block name space. Optionally, the process may include the step of separating the plurality of storage locations into a plurality of categories associated with a different level of service, and optionally separating the plurality of storage locations into a plurality of categories being associated with a different RAID level of performance. In one practice the mapping process associates different portions of the logical block name space to different respective levels of RAID.

Optionally, the process may include the step of load balancing by moving data between different portions of the logical block name space. Load balancing may include moving data between storage pools, including storage pools that have different levels of performance, to thereby improve overall system performance, or the performance of certain aspects of the system, such as the overall performance of one class of storage, or to provide better service for one class of data.

To this end, the process may allow an administrator to move data between different storage pools. This can be done through a user interface that provides the administrator with the ability to set parameters, including operating parameters, which will move data between different storage pools.

The mapping step may create multiple storage volumes at a selected level of performance.

Further features and advantages of the invention will be apparent from the following description of preferred embodiments and from the claims.

### BRIEF DESCRIPTION OF THE DRAWINGS

The following figures depict certain illustrative embodiments of the invention in which like reference numerals refer to like elements. These depicted embodiments are to be understood as illustrative of the invention and not as limiting in any way.
- FIG. 1: is a schematic diagram of a client-server architecture with servers organized in a server group;
- FIG. 2: is a schematic diagram of server group as seen by a client;
- FIG. 3: shows details of the information flow between the client and the servers of a group;
- FIG. 4: is a process flow diagram for retrieving resources in a partitioned resource environment;
- FIG. 5: depicts in more detail and as a functional block diagram one embodiment of a system according to the invention;
- FIG. 6: depicts one example of a routing table;
- FIG. 7: depicts schematically the structure of a prior art system for providing access to a resource maintained on a storage area network;
- FIG. 8: presents a function block diagram of one system according to the invention;
- FIG. 9: presents in more detail the system depicted in Fig. 8;
- FIG. 10: depicts the flow of data through layers of a network;
- FIG. 11: depicts in more detail one embodiment of a system of FIG. 8;
- FIG. 12: presents a flow chart diagram of one exemplary process of the system according to FIG. 8;
- FIG. 13: depicts an individual storage device that has different performance characteristics based on a list of LBNs;
- FIG. 14: illustrates RAID differentiated storage pools sharing the same storage devices;
- FIG. 15: depicts differentiated storage pools by combining individual storage device performance and RAID performance characteristics;
- FIG. 16: illustrates extent based and page based allocation of a storage service across differentiated storage pools; and
- FIG. 17: depicts in more detail and as a functional block diagram an embodiment similar to the embodiment of FIG. 5.

### DETAILED DESCRIPTION OF CERTAIN ILLUSTRATED EMBODIMENTS

The systems and methods described herein include systems for organizing and managing resources that have been distributed over a plurality of servers on a data network. More particularly, the systems and methods described herein include systems and methods for providing more efficient operation of a partitioned service. In particular, the systems and methods described herein include systems and methods for managing the allocation of data blocks across a partitioned volume of storage. Although the systems and methods described herein will be largely directed to storage devices and applications, it will be understood by those of skill in the art that the invention may be applied to other applications, including distributed file systems, systems for supporting application service providers and other applications. Moreover, it will be understood by those of ordinary skill in the art that the systems and methods described herein are merely exemplary of the kinds of systems and methods that may be achieved through the invention and that these exemplary embodiments may be modified, supplemented and amended as appropriate for the application at hand.

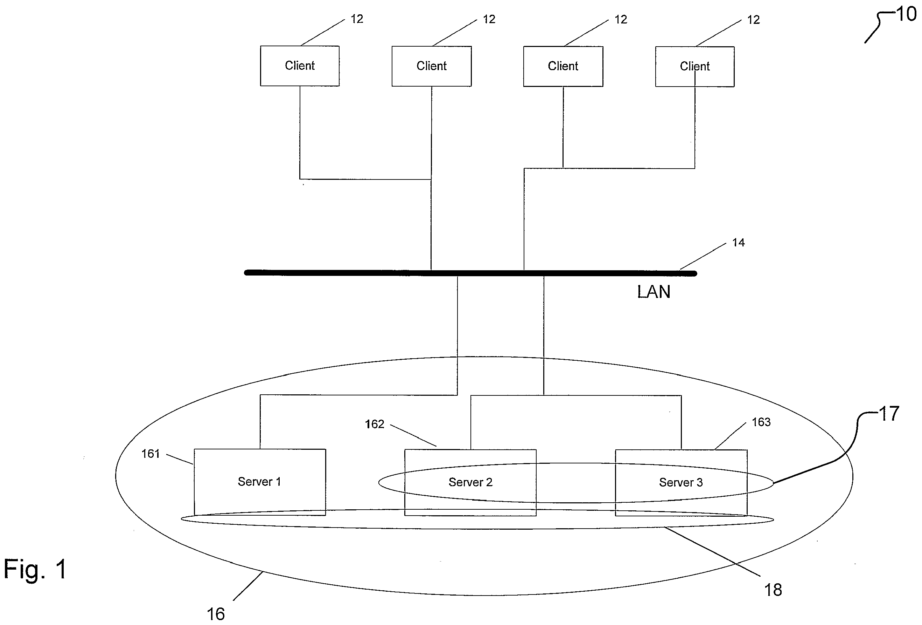

Referring first to FIG. 1, a system 10 for adaptive storage block data distribution according to the invention is depicted. As show in FIG. 1, one or several clients 12 are connected, for example via a network 14, such as the Internet, an intranet, a WAN or LAN, or by direct connection, to servers 161, 162, and 163 that are part of a server group 16. Although FIG. 1 depicts the group 16 as a local collection of servers, this may be a collection or group of servers that includes server that are physically remote from each other.

The client 12 can be any suitable computer system such as a PC workstation, a handheld computing device, a wireless communication device, or any other such device, equipped with a network client capable of accessing and interacting with the server group 16 to exchange information with the server group 16. The network client may be a any client that allows the user to exchange data with the server. Optionally, the client 12 and the server group 16 rely on an unsecured communication path for accessing services at the remote server group 16. To add security to such a communication path, the client and the server can employ a security group system, such as any of the conventional security systems that have been developed to provide to the remote user a secured channel for transmitting data over a network. One such system is the Netscape secured socket layer (SSL) security mechanism that provides to a remote user a trusted path between a conventional web browser program and a web server.

Each server 161, 162 and 163 may comprise a commercially available server platform, such as a Sun Sparc™ system running a version of the Unix operating system.

Each server 161, 162 and 163 may also include other software components that extend their operation to accomplish the transactions described herein, and the architecture of the servers 161, 162 and 163 may vary according to the application. For example, each server may have built-in extensions, typically referred to as modules, to allow the servers to perform the operations hereinafter, or servers may have access to a directory of executable files, each of which may be employed for performing the operations, or parts of the operations described below. Further, in other embodiments, the servers 161, 162 and 163 may employ a software architecture that builds certain of the processes described below into the server's operating system, into a device driver, or into a software process that operates on a peripheral device, such as a tape library, a RAID storage system or some other device. In any case, it will be understood by those of ordinary skill in the art that the systems and methods described herein may be realized through many different embodiments, and practices, and that the particular embodiment and practice employed will vary as a function of the application of interest and all these embodiments and practices fall within the scope hereof.

In such an arrangement, the client 12 will contact one of the servers, for example server 161, in the group 16 to access a resource, such as a data block, page, file, database, application, or other resource. The contacted server 161 itself may not hold or have control over the requested resource. To address this, the server group 16 is configured to make the partitioned resources available to the client 12. For illustration, the diagram shows two resources, one resource 18 that is partitioned over all three servers, servers 161, 162, 163, and another resource 17 that is partitioned over two of the three servers. In the exemplary application of the server group 16 being a block data storage system, each resource 18 and 17 may be a partitioned block data volume. In the embodiment of FIG. 1, the server group 16 therefore provides a block data storage service that may operate as a storage area network (SAN) comprised of a plurality of equivalent servers, servers 161, 162 and 163. Each of the servers 161, 162 and 163 may support one or more portions of the partitioned block data volumes 18 and 17. In the depicted system 10, there are two data volumes and three servers, however there is no specific limit on the number of servers. Similarly, there is no specific limit on the number of resources or data volumes. Moreover, each data volume may be contained entirely on a single server, or it may be partitioned over several servers, either all of the servers in the server group, or a subset of the server group. In practice, there may of course be limits due to implementation considerations, for example the amount of memory available in the servers 161, 162 and 163 or the computational limitations of the servers 161, 162 and 163. Moreover, the grouping itself, i.e., deciding which servers will comprise a group 16, may in one practice comprise an administrative decision. In a typical scenario, a group might at first contain only a few servers, perhaps only one. The system administrator would add servers to a group as needed to obtain the level of service required. Increasing servers creates more space (memory, disk storage) for resources that are stored, more CPU processing capacity to act on the client requests, and more network capacity (network interfaces) to carry the requests and responses from and to the clients. It will be appreciated by those of skill in the art that the systems described herein are readily scaled to address increased client demands by adding additional servers into the group 16.

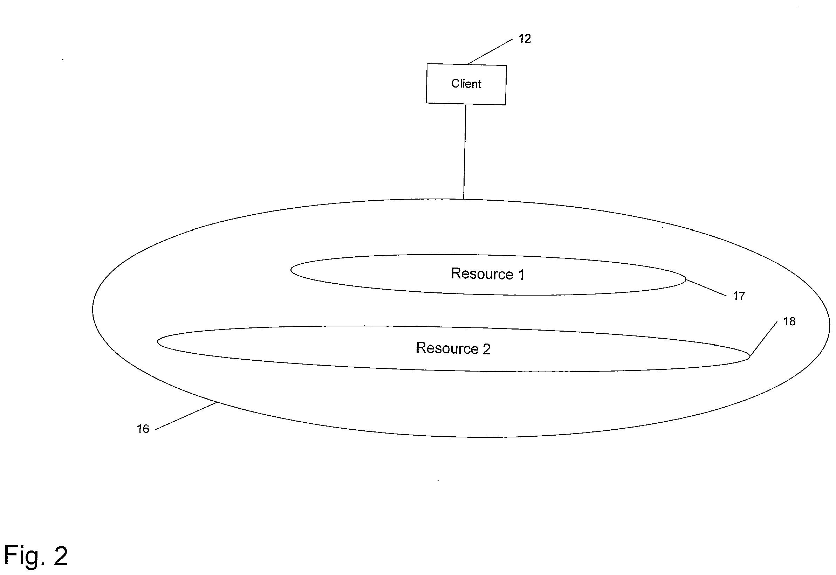

Referring now to FIG. 2, a client 12 connecting to a server 161 (FIG. 1) will see the server group 16 as if the group were a single server. The client 12 is not aware that the server group 16 is constructed out of a potentially large number of servers 161, 162, 163, nor is it aware of the partitioning of the block data volumes 17, 18 over the several servers 161, 162, 163. As a result, the number of servers and the manner in which resources are partitioned among the servers may be changed without affecting the network environment seen by the client 12.

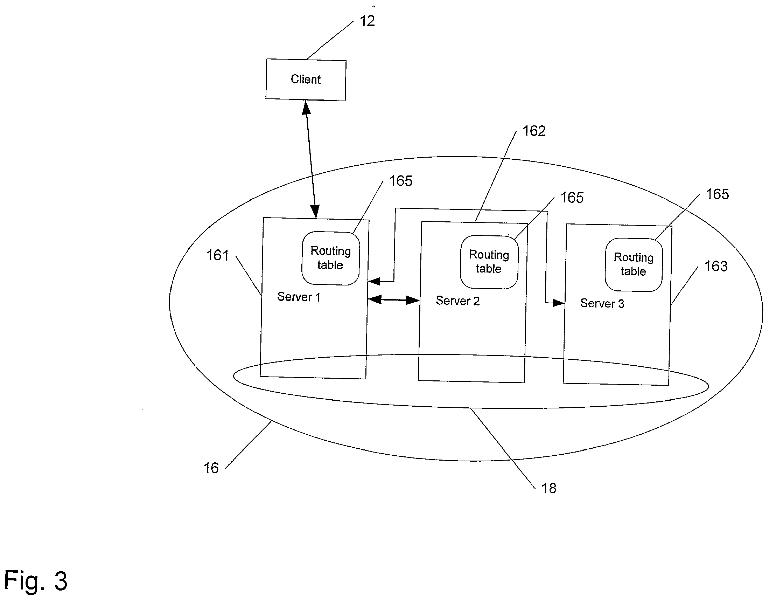

Referring now to FIG. 3, in the partitioned server group 16, any volume may be spread over any number of servers within the group 16. As seen in FIGS. 1 and 2, one volume 17 (Resource 1) may be spread over servers 162, 163, whereas another volume 18 (Resource 2) may be spread over servers 161, 162, 163. Advantageously, the respective volumes are arranged in fixed-size groups of blocks, also referred to as "pages," wherein an exemplary page contains 8192 blocks. Other suitable page sizes may be employed. In an exemplary embodiment, each server in the group 16 contains a routing table 165 for each volume, with the routing table 165 identifying the server on which a specific page of a specific volume can be found. For example, when the server 161 receives a request from a client 12 for partitioned volume 18, block 93847, the server 161 calculates the page number (page 11 in this example for the page size of 8192) by dividing the requested block number by the page size and looks up in the routing table 165 the number of the server that contains page 11. If server 163 contains page 11, the request is forwarded to server 163, which reads the data and returns the data to the server 161. Server 161 then send the requested data to the client 12. In other words, the response is always returned to the client 12 via the same server 161 that received the request from the client 12.

It is transparent to the client 12 to which server 161, 162, 163 it is connected. Instead, the client only sees the servers in the server group 16 and requests the resources of the server group 16. It should be noted here that the routing of client requests is done separately for each request. This allows portions of the resource to exist at different servers. It also allows resources, or portions thereof, to be moved while the client is connected to the server group 16 - if that is done, the routing tables 165 are updated as necessary and subsequent client requests will be forwarded to the server now responsible for handling that request. At least within a resource 17 or 18, the routing tables 165 are identical. The described invention is different from a "redirect" mechanism, wherein a server determines that it is unable to handle requests from a client, and redirects the client to the server that can do so. The client then establishes a new connection to another server. Since establishing a connection is relatively inefficient, the redirect mechanism is ill-suited for handling frequent requests.

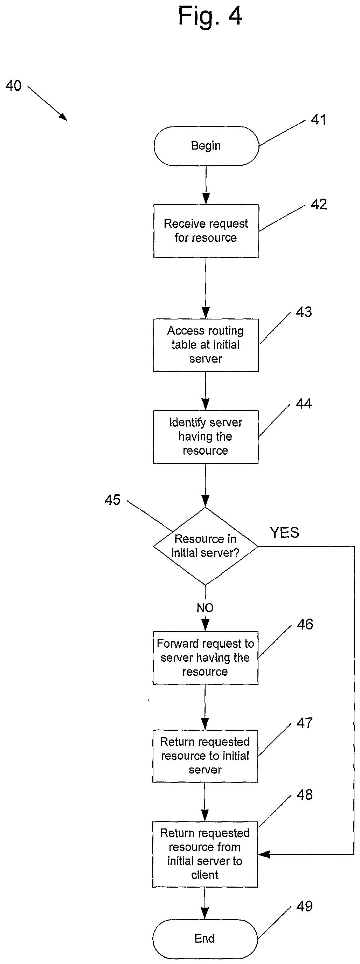

FIG. 4 depicts an exemplary process flow 40 for handling client requests in a partitioned server environment. The process 40 begins 41 by receiving a request for a resource, such as a file or blocks of a file, step 42. The server will consult a routing table, step 43, to determine which server actually holds the specific piece of data requested by the client, step 44. The process checks in step 45 if the requested resource is present at the initial server that received the request from the client. If the requested resource is present at the initial server, the initial server returns the requested resource to the client, step 48, and the process 40 terminates, step 49. Conversely, if the requested resource is not present at the initial server, the request is then forwarded to the server that holds the requested resource, step 46, which returns the requested resource to the initial server, step 47. The process then goes to step 48 as before, to have the initial server forward the requested resource to the client, and the process 40 terminates, step 49.

The resources spread over the several servers can be directories, individual files within a directory, or even blocks within a file. Other partitioned services could be contemplated. For example, it may be possible to partition a database in an analogous fashion or to provide a distributed file system, or a distributed or partitioned server that supports applications being delivered over the Internet. In general, the approach can be applied to any service where a client request can be interpreted as a request for a piece of the total resource, and operations on the pieces do not require global coordination among all the pieces.

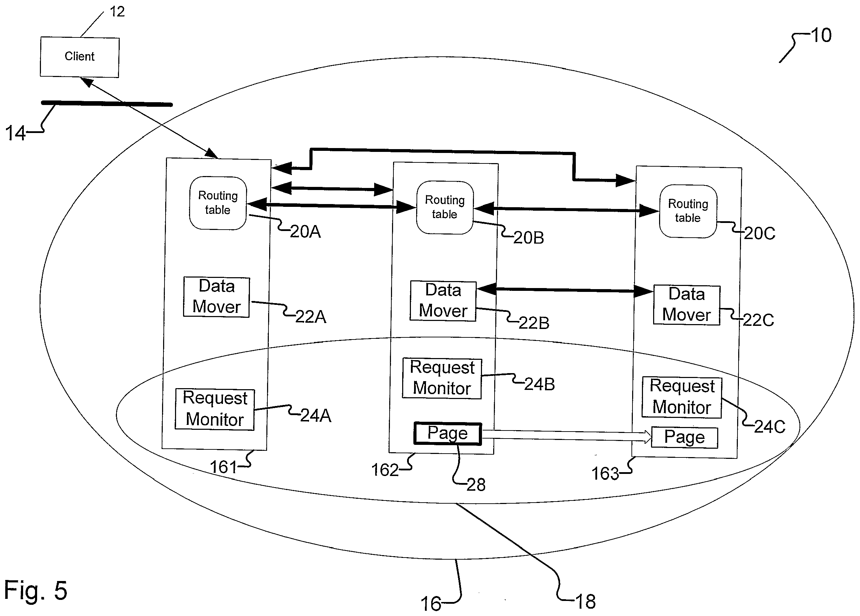

Turning now to FIG. 5, one particular embodiment of a block data service system 10 is depicted. Specifically, FIG. 5 depicts the system 10 wherein the client 12 communicates with the server group 16. The server block includes three servers, server 161, 162 and 163. Each server includes a routing table depicted as routing tables 20A, 20B, and 20C. Additionally, each server includes a data mover process 22A, 22B, and 22C respectively. In addition to the routing tables and data mover processes, each of the equivalent servers 161, 162, and 163 are shown in FIG. 5 as including a request monitor process, 24A, 24B, and 24C respectively. Further, and for the purpose of illustration only, the FIG. 5 presents an arrangement of data blocks as a page of data 28 that may be transferred from one server, 162, to another server, 163. It will be understood that although FIG. 5 depicts the data blocks as organized into a data page, this is only one particular practice and other practices may move individual data blocks between the different servers. Moreover, different kinds of organizations of data blocks, such as files, directories, and other organizations of data may be employed and the systems and methods described herein are not to be limited to any particular embodiment such as an embodiment that moves data blocks as pages from one server to another.

As shown in FIG. 5, each of the equivalent servers 161, 162, and 163 may include a routing table 20A, 20B, and 20C respectively. As shown in FIG. 5, each of the routing tables 20A, 20B, and 20C are capable of communicating with each other for the purposes of sharing information. As described above, the routing tables can track which of the individual equivalent servers is responsible for a particular resource maintained by the server group 16. In the embodiment shown in FIG. 5, the server group 16 may be a storage area network (SAN) wherein each of the equivalent servers 161, 162, and 163 has an individual IP address that may be employed by a client 12 for accessing that particular equivalent server on the SAN. As further described above, each of the equivalent servers 161, 162, and 163 is capable of providing the same response to the same request from a client 12. To that end, the routing tables of the individual equivalent 161, 162, and 163 coordinate with each other to provide a global database of the different resources (e.g., in this exemplary embodiment, data blocks, pages, or other organizations of data blocks) and the individual equivalent servers that are responsible for those respective data blocks, pages, files, or other storage elements.

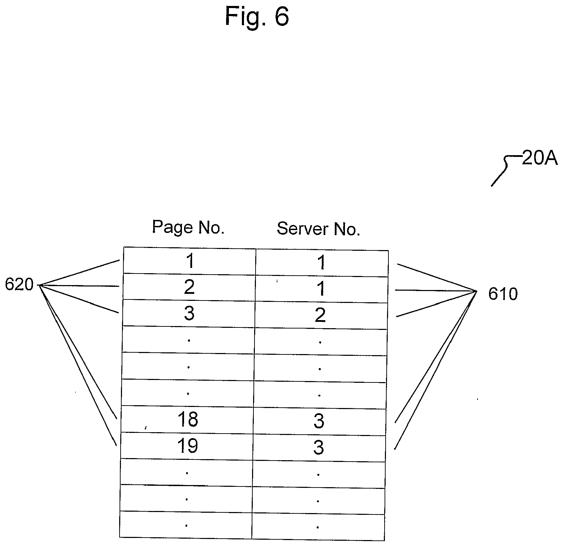

FIG. 6 depicts one example of a routing table 20A and the information stored therein. As depicted in FIG. 6, each routing table includes a server number 610 for each of the equivalent servers 161, 162 and 163 that support the partitioned data block storage service. Additionally, each of the routing tables identifies those pages 620 associated with each of the respective equivalent servers.

As further shown in FIG. 5, the data mover process 22B employs the information stored within the routing table 20B for the purpose of determining whether a more efficient or reliable arrangement of data blocks may be achieved. To this end, the data mover process 20B comprises a computer program that applies an algorithm to the data collected by the request monitors 24A, 24B, and 24C. The data mover process applies an algorithm that reviews the current distribution of data blocks and considers the current client demand for these data blocks when determining whether a more efficient allocation of data blocks is available. To this end, the data mover process 22B also is capable of communicating with the request monitor process 24B.

The request monitor processes 24A, 24B, and 24C each observer the request patterns arriving at their respective equivalent servers to determine to determine whether patterns or requests from clients 12 are being forwarded to the SAN and whether these patterns may allow for more efficient or reliable partitioning of data blocks. In one embodiment, the request monitor process 24A, 24B, and 24C merely monitor client requests coming to their respective equivalent servers. In one embodiment, the request monitor processes each build a table representative of the different requests that have been seen by the individual request monitor processes. Each of the request monitor processes 24A, 24B, and 24C are capable of communicating between themselves for the purpose of building a global database of requests seen by each of the equivalent servers. Accordingly, in this embodiment each of the request monitor processes is capable of integrating request data from each of the equivalent servers 161, 162 and 163 in generating a global request database representative of the request traffic seen by the entire block data storage system 16.

In one embodiment, this global request database is made available to the data mover processes 22A, 22B, and 22C for their use in determining whether a more efficient or reliable partitioning of data blocks is available. However, in alternate embodiments, each of the request mover processes 24A, 24B, and 24C include pattern identification processes capable of reviewing the request database to determine whether patterns of request exist within the database. For example, in one embodiment, the request monitor process 24B is capable of reviewing the global database of requests to determine whether there is a pattern where a plurality of different data blocks are typically requested either together or in sequence. If such a pattern is identified, then the pattern may be flagged and made available to any of the data mover processes 22A, 22B, or 22C for their use in determining whether data blocks could be striped across a plurality of servers to provide for more efficient servicing of client requests. Additionally, in other embodiments, the request monitor processes may be able to identify blocks of data that are typically requested together and which are being requested at a frequency that is above a pre-identified or pre-determined threshold. This allows the request monitors 24A, 24B, and 24C to identify "hot blocks" that may exist within the partitioned volume. In other embodiments, the request monitor processes 24A, 24B and 24C may be capable of identifying other patterns that occur within the requests being forwarded from clients to the block data storage system 16.

Returning again to FIG. 5, an example of a redistribution of partitioned data blocks is depicted. Specifically, FIG. 5 shows any example wherein the data mover process 22B and the data mover process 22C coordinate their activities for the purposes of moving a page of data 28 from the equivalent server 162 to the equivalent server 163. In this embodiment, a page of data is being moved from one server to the next. As those of ordinary skill in the art will understand, a page of data is typically an organization of data blocks that groups together a plurality of data blocks such as 2,000 to typically 16,000 data blocks and provides a header such that the page is identified as a separate unit of storage on the partitioned block data volume 18. Accordingly, in this embodiment, the request monitor 24B may have determined that the page 28 is requested with sufficient frequency as to be deemed a hot block. It may further have determined that the equivalent server 162 is resource constrained in comparison to equivalent server 163. Accordingly, the equivalent server 163 may have the available resources for servicing requests from client 12 for page 28 more quickly than equivalent server 162 could do. As such, the data mover process 22B and data mover process 22C may operate together to transfer the page 28 from equivalent server 162 to equivalent server 163.

In one embodiment, the data mover process merely transfers page 28 from the storage device of equivalent server 162 to the storage device of equivalent server 163 and then updates the associated routing tables with this update being communicated across the plurality of routing tables 20A, 20B, and 20C within the block data storage system 16. However, in other embodiments, the data mover processes 22B and 22C may employ a transaction mechanism process that monitors the transfer of page 28 from the equivalent server 162 to the equivalent server 163 and determines when the transaction is complete and optionally whether the page 28 was transferred without error, and at that point updates the associated routing tables 20A, 20B, and 20C. The transaction employed by the data mover processes 22B and 22C may be any of the conventional transfer mechanism processes such as those commonly employed with a distributed file system.

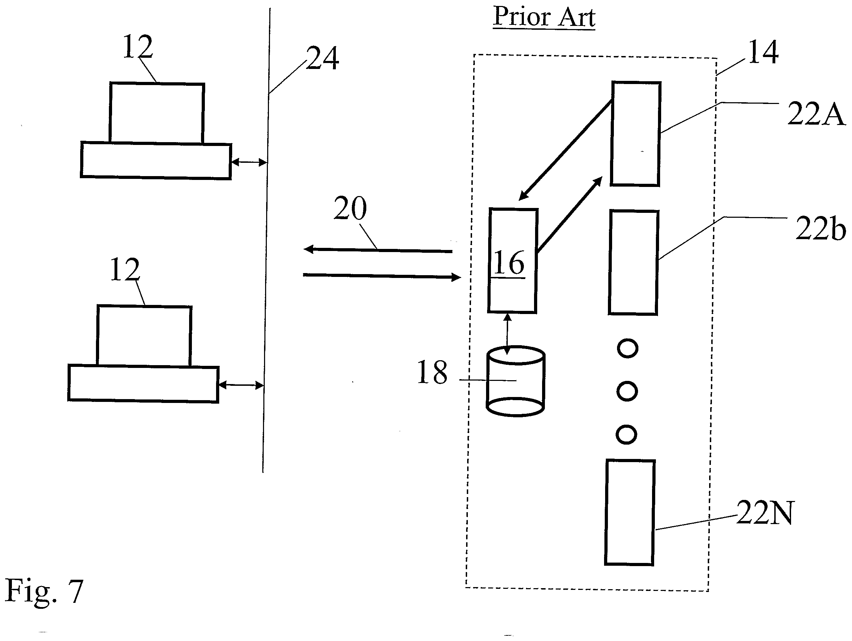

FIGS. 7 to 12 describe systems and methods that more efficiently address requests from a client to access data or services.

Referring now to FIG. 7, there is depicted a prior art network system for supporting requests for resources from a plurality of clients 12 that are communicating across a local area network 24. Specifically, FIG. 7 depicts a plurality of clients 12, a local area network (LAN) 24, and a storage system 14 that includes a switch 16, a master data table 18, and a plurality of servers 22a-22n. The storage system 14 may provide a storage area network (SAN) that provides storage resources to the clients 12 operating across the LAN 24. As further shown in FIG. 7 each client 12 may make a request for a resource maintained on the storage system/SAN 14. Each request is delivered to the switch 16 and processed therein. During processing is that the clients 12 can request resources across the LAN 24 and during processing, the switch 16 employs the master data table 18 to identify which of the plurality of servers 22A through 22N has the resource being requested by the respective client 12.

In FIG. 7, the master data table 18 is depicted as a database system, however in alternative embodiments the switch 16 may employ a flat file master data table that it maintained by the switch 16. In either case, the switch 16 employs the master data table 18 to determine which of the servers 22A through 22N maintains which resources. Accordingly, the master data table 18 acts as an index that lists the different resources maintained by the storage system 14 and which of the underlying servers 22A through 22N is responsible for which of the resources.

Although a LAN is described, those skilled in the art will realize that networks other than a LAN can be used, such as a metropolitan area network (MAN), an wide area network (WAN), a campus network, or a network of networks, such as the Internet. Accordingly, the invention is not limited to any particular type of network.

As further depicted by FIG. 7, once the switch 16 determines the appropriate server 22A through 22N for the requested resource, the retrieved resource may be passed from the identified server through the switch 16 and back to the LAN 24 for delivery to the appropriate client 12. Accordingly, FIG. 7 depicts storage system 14 employing the switch 16 as a central gateway through which all requests from the LAN 24 are processed. The consequence of this central gateway architecture is that delivery time of resources requested by clients 12 from storage system 14 can be relatively long and this delivery time may increase as latency periods grow due to increased demand for resources maintained by storage system 14.

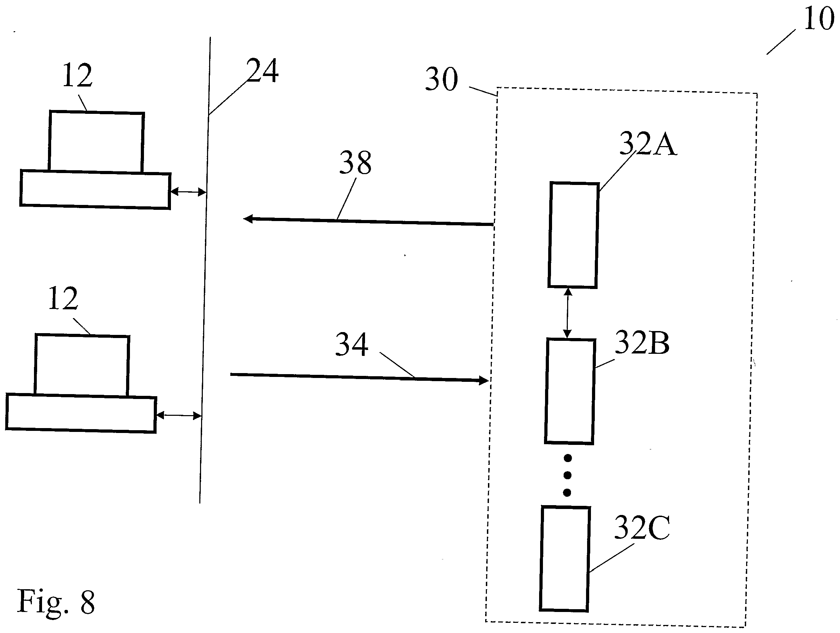

Turning to FIG. 8, a system 10 according to the invention is depicted. Specifically, FIG. 8 depicts a plurality of clients 12, a local area network (LAN) 24, and a server group 30 that includes plurality of servers 32A through 32N. As shown by FIG. 8, the clients 12 communicate across the LAN 24. As further shown in FIG. 8, each client 12 may make a request for a resource maintained by the server group 30. In one application, the server group 30 is a storage area network (SAN) that provides network storage resources for clients 12 communicated across the network 24. Accordingly, a client 12 may make a request across the LAN 24 that is transmitted, as depicted in FIG. 8 as request 34, to a server such as the depicted server 32B.

Server group 30, configured as a storage area network, may comprise a plurality of equivalent servers 32A through 32N. Each of these servers has a separate IP address and thus the server group 30 appears as a SAN that includes a plurality of different IP addresses, each of which may be employed by the clients 12 for accessing storage resources maintained by the SAN. Furthermore, the depicted server group/SAN 30 may employ the plurality of servers 32A though 32N to partition resources across the storage area network. Thus, each of the individual servers may be responsible for a portion of the resources maintained by the server group/SAN 30.

In operation, the client request 34 received by the server 32B is processed by the server 32B to determine the resource of interest to that client 12 and to determine which of the plurality of servers 32A through 32N is responsible for that particular resource. In the example depicted in FIG. 8, the storage area network 30 determines that the server 32A is responsible for the resource identified in the client request 34. As further shown by FIG. 8, the storage area network 30 employs a system where, rather than have the original server 32B respond to the client request 34, the storage area network 30 employs a shortcut response that allows the responsible server, server 32A, to respond directly to the requesting client 12 by having the responsible server 32A deliver a response 38 that can be routed over the LAN 24 to the requesting client 12.

As discussed above, the storage area network 30 depicted in FIG. 8 comprises a plurality of equivalent servers. Equivalent servers will be understood, although not limited to, server systems that expose a uniform interface to clients 12: each equivalent server will respond in the same manner to a request presented by the client 12. Thus, each server 32A through 32N presents the same response to a client 12 and therefore it is immaterial to the client 12 which of the servers 32A through 32N responds to its request. Each of the depicted servers 32A through 32N may comprise conventional computer hardware platforms such as one of the commercially available server systems from Sun Microsystems, Inc. of Santa Clara, California. Each server executes one or more software processes for the purpose of implementing the storage area network. The server group 30 may include a Fibre Channel network system, an arbitrated loop, or any other type of network system suitable for providing a storage area network.

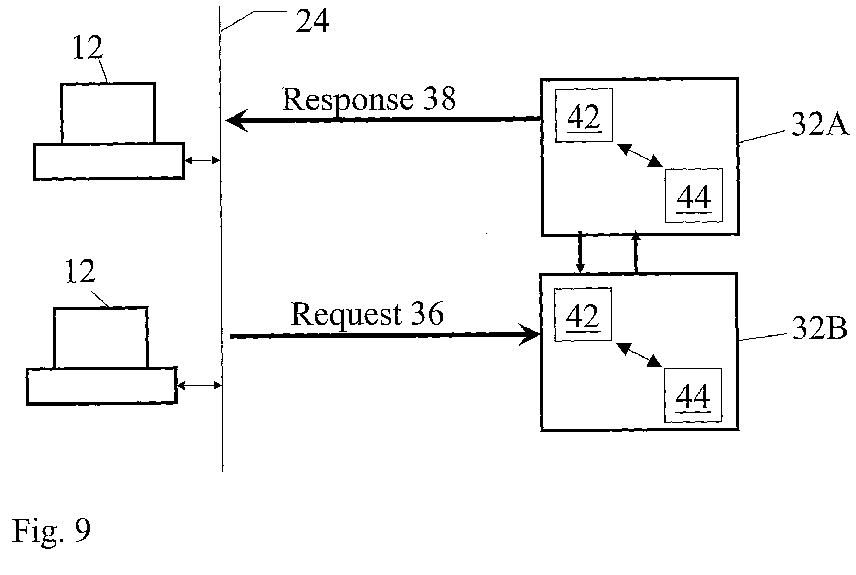

Each server 32 may maintain its own storage resources or, as further shown in FIG. 9, may have a storage device 44 coupled to a dedicated server unit 42. The storage device 44 may be a RAID system, a tape library system, a disk array, or any other device suitable for providing storage resources for the clients 12 over LAN 24.

The systems and processes of the invention are not limited to storage area network applications and may be applied to other applications where it may be more efficient for a first server to receive a request and a second server to generate and send a response to that request. Other applications may include distributed file systems, database applications, application service provider applications, or any other application that may benefit from this short-cut response technique.

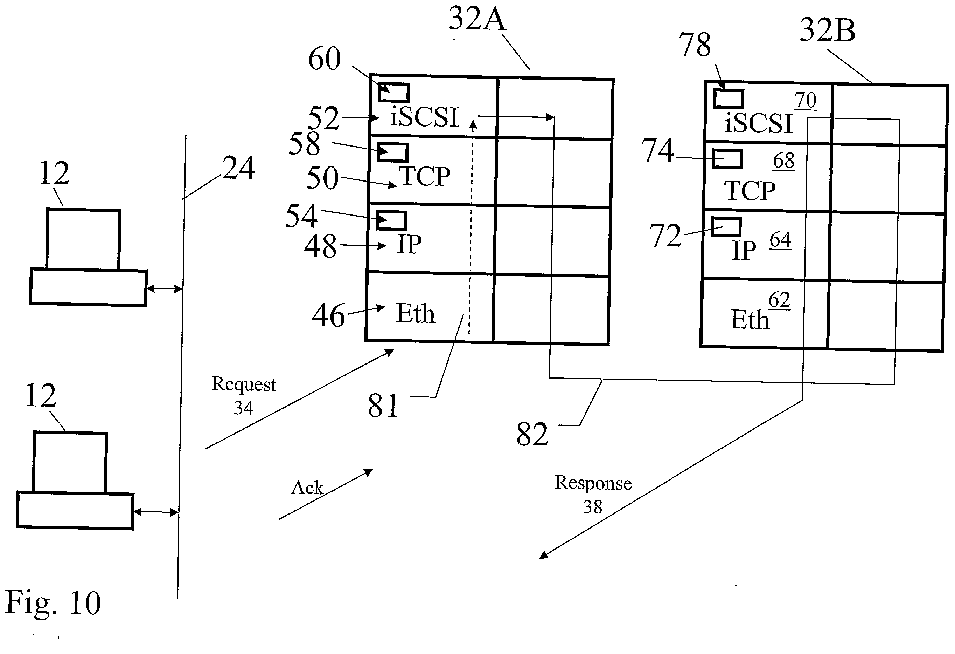

FIGS. 9 and 10 depict in more detail one embodiment of a short-cut response suitable for use with the system depicted in FIG. 8. Specifically, FIG. 10 depicts a functional block diagram that shows one example of how connection and state information is created during a short-cut response operation. As will be discussed in more detail hereinafter, when a client 12 and a server 32 exchange information, a connection is established between the client and the server. For each established connection, the server 32 maintains some information about the connection that the server will employ when responding to the client 12. In a traditional client/server exchange, the server that received the client request also responds to the client request. In these cases then, the server that is responding to the request is also the server that set up the connection to the client 12. Thus, all of the connection information is available at the server when the server needs that information to make its response.

Under the short-cut response process described herein, the server generating and transmitting the response may be different from the server that received the request 34 and set up the connection. Accordingly, the server generating the response 38 may need to access the connection information residing on the receiving server in order to be able to directly respond to the client 12. This situation is depicted at a high level in FIG. 9 and explained in detail below.

On example of a short-cut response is depicted in FIG. 10. Specifically, FIG. 10 depicts two servers 32A and 32B that take part in a short-cut response to a request 34 transmitted from one of the clients 12. In this embodiment, the receiving server is server 32A and the responding server is server 32B. The short-cut response technique described herein allows the request 34 to be received by receiving server 32A. The receiving server 32A may determine that server 32B is actually responsible for the resource that has been identified in the request 34. Accordingly, the receiving server 32A may forward the request 34 to the responding server 32B. The responding server 32B may determine the appropriate response to the request 34. The responding server 32B may then prepare a response 38 that may be transmitted directly to the client 12. However, as discussed above, to generate the response 38, the responding server 32B accesses connection information generated by the receiving server 32A in response to the request 34 transmitted by the client.

As depicted in FIG. 10, when the client request 34 is received by the receiving server 32A, the client request may be handled by a plurality of network layers including the data link layer 46. (Typically, the physical layer employs an Ethernet adapter card and the Ethernet protocol; however, the physical layer implementation may vary according to the application.) Thus, further shown in FIG. 10, the request 34 may be processed by the data link layer 46, network layer 48, and transport layer 50 that (in the depicted embodiment) comprise an Ethernet protocol processing layer, Internet Protocol (IP) processing layer, and a Transmission Control Protocol (TCP) transport layer, respectively.

As further shown in FIG. 10, both at the IP layer and the TCP layer connection information 54 and 58 respectively is established. This information can include information representative of the IP address of the client 12 that generated request 34 and to which the response 38 is to be forwarded. It may also include TCP and/or iSCSI sequence numbers, which may also be used to identify the client in some embodiments.

At the TCP layer, connection information 58 may be established that includes information such as the number of datagrams or packets received or other kinds of similar information.

After the TCP layer 50, the request 34 may travel to the application layer (i.e., the "upper layers" in the OSI model) 52. In the depicted embodiment, the application layer is the Internet Small Computer System Interface (iSCSI) protocol that may be employed as part of the storage area network. At the application layer, connection information 60 may be stored where this connection information is representative of application level connection information that is relevant to the proper functioning of the iSCSI application program. In addition to connection information, it will also be understood that state information, such as HTTP cookies, TCP and/or iSCSI sequence numbers, and other similar information may be maintained and stored.

In either case, it will be seen that at different levels of the network protocol information is generated that is relevant to generating a response to the client 12. In the shortcut response process described herein, the connection and state information maintained at the different layers 54, 58 and 60 of the protocol stack are shared with the responding server 32B. As shown in FIG. 10, the server 32B has a similarly established protocol stack. The protocol stack includes a data link layer 62, a network layer 64, a transport layer 68, and an application layer 70. Similar to receiving server 32A, in responding server 32B each of the layers 64, 68 and 70 provides for storing connection or state information, such as the depicted connection and state information shown by the functional blocks 72, 74, and 78 respectively.

In responding to the request 34, the receiving server 32A has the request 34 travel up through the protocol stack, passing through each layer, as denoted by dashed line 81. As is known to those of ordinary skill in the art, as the request 34 travels through the protocol stack, each layer processes the request, unpacking information, reviewing header information in the request, and performing other functions including setting up and updating connection information that may be employed when responding to the request 34.

As further shown in FIG. 10, at the highest layer 52, the iSCSI protocol may determine that the server 32B is actually responsible for the resource requested by the client 12. Accordingly, in this application the iSCSI application program may forward the client's request to the server 32B, as depicted by solid line 82. The application layer 52 forwards the client request to the application layer 70 of the server 32B that is in control of the resource requested by the client 12. To this end, the server 32A may include a distributed socket server that is capable of providing access to the connection data 54, 58 and 60 maintained at the server 32A. As depicted in FIG. 10, the result of the distributed socket server is to provide the server 32B with access to this connection and state information as if the request 34 had been received and routed through the network stack of server 32B. As shown by path 82 in FIG. 10, the distributed socket server achieves an effect as if the request 34 had been routed from server 32A to server 32B. Consequently, the server 32B has the necessary connection and state information to generate the response 38 for the client 12.

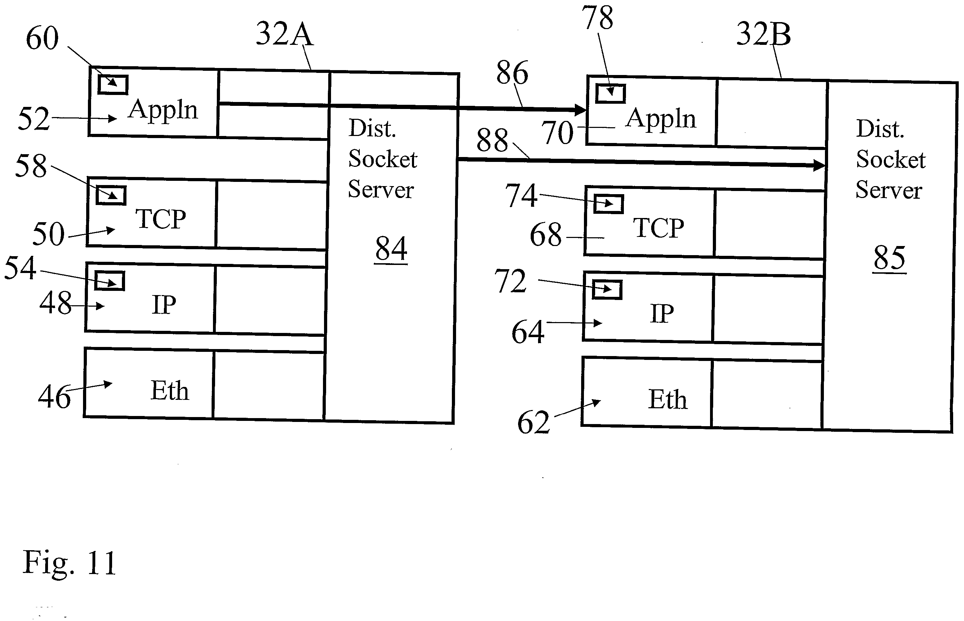

Turning now to FIG. 11, one embodiment of a distributed socket server is depicted. Specifically, FIG. 11 depicts the equivalent servers 32A and 32B. Server 32A has a plurality of layers in the protocol stack that include layers 46, 48, 50 and 52. Alongside the layers is shown the distributed socket server 84. Similarly, the server 32B is shown as having a plurality of layers in the protocol stack including layers 62, 64, 68 and 70. Server 32B has a distributed socket server process 85 that is shown as being in communication with each of the layers of the protocol stack. Also depicted in FIG. 11 is an example of a data exchange between the application layer 52 of server 32A and the application layer 70 of server 32B, as well as a data exchange between socket server 84 of server 32A and socket server 85 of server 32B.

As shown in FIG. 11, the distributed socket server 84 may work with a socket established by the application 52. In one embodiment, the application 52 receives the request 34 (not shown) from the client and determines that server 32A is not the server responsible for the resource requested by the client. The server 32A then determines or identifies the server on the network that is responsible for the requested resource. Application 52 determines that server 32B is responsible for the requested resource. The application 52 then forwards the request, at the application level, to the application 70 operating on server 32B. The forwarding of the request is depicted by the communication 86 shown on FIG. 11. The application 70 receives the forwarded request and processes that request.

Upon processing the request, the server 32B determines that the connection and state information for generating the response (not shown) is stored at server 32A. Accordingly, the application 70 can direct the socket server 85 to request connection and state information from the socket server 84. The socket server 84 is in communication with each layer 46, 48, 50, and 52 of the protocol stack. Accordingly, the socket server 84 can gather the appropriate connection and state information from the different layers of the protocol stack and transfer the collected connection and state information to the socket server 85 via communication 88. The socket server 85 can store or establish the appropriate information at the appropriate protocol layers 64, 68 and 70. After server 32B generates the response, its socket server 85 sends any necessary changes in the connection state back to socket server 84 in server 32A. Accordingly, the distributed socket server 85 configures the server 32B to generate the response 38 (see FIG. 10).

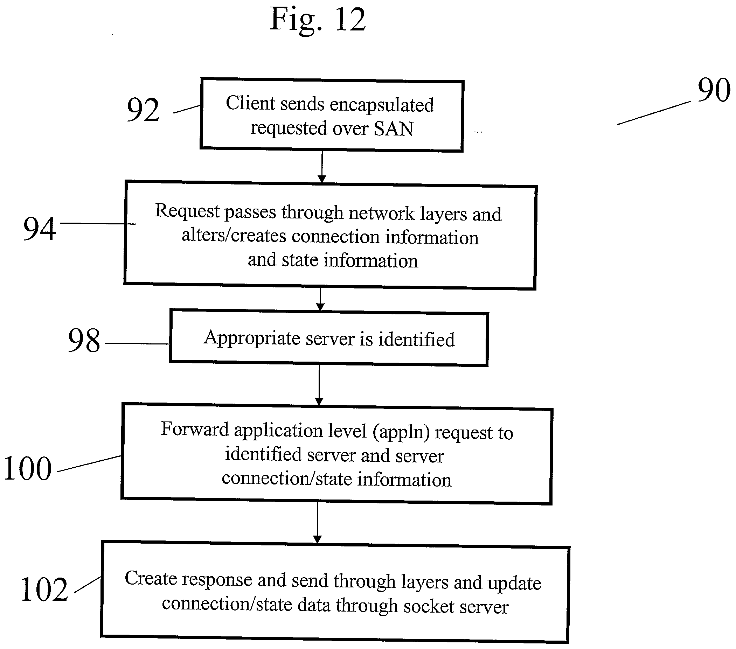

Turning now to FIG. 12, one process for short-cut response is shown as a flow chart diagram. Specifically, FIG. 12 depicts one process 90 that begins in a step 92 when a client such as one of the depicted clients 12 sends an encapsulated request to the storage area network (SAN). After step 92, the process 90 proceeds to step 94 wherein the request passes through the protocol stack of the server to which the client directed the request. The request, while passing through the protocol stack, alters and creates connection information and state information related to this request. At block 98, the process 90 determines the appropriate server for responding to the request generated by the client 12. In those cases where the responding server is different from the server that received the request, the process 90 may forward (or otherwise route or redirect) the request to the identified responding server.

At block 100, the responding server can process the forwarded request to determine the server that has the connection and state information necessary for generating the short-cut response (i.e., the receiving server). In an alternative practice, the forwarded request may also contain the connection state information necessary for having the identified responding server, such as server 32B, generate the appropriate response for the client. In either case, the server that has been identified as being responsible for the resource requested by the client now has the request from the client as well as the connection state information necessary to respond to that request. In block 102 the responding server can create the response through the layers of the protocol stack on that server and to the client. The distributed socket server can then update the connection and state information on the appropriate server and in the process may terminate.

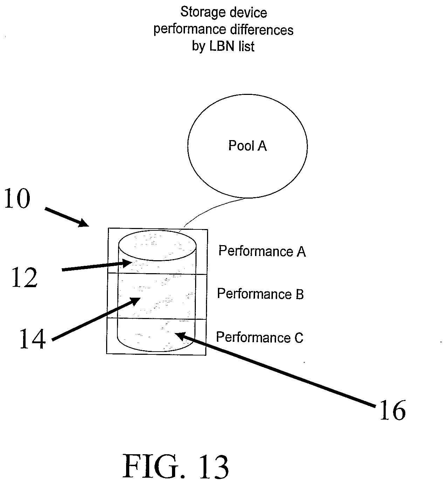

FIGS. 13 - 17 relate to a storage system having differentiated storage pools, which allow a system administrator to store different types of data with different classes of storage.

Referring now first to FIG. 13, there is depicted a storage device 10 which shows graphically that different sections of the logical block name (LBN) can have different kinds of performance characteristics. Specifically, in the example depicted by FIG. 13, the LBN of the device 10 is divided into three different performance classes, which are shown respectively as Section 12, 14 and 16. Thus, FIG. 13 is an abstract representation of the entire name space on the disc 10. Although the use of these terms can vary somewhat, it is generally understood that the logical block name space is the full compliment of the addressable locations on the disc and it will be understood that a logical block will be understood as the smallest addressable space on a disc, such as the disc 10. Each logical block may be identified by a unique logical block name (or number), typically assigned in order starting from 0 at the beginning of the disc. Under the ISO 9660 standard, all data on a CD is addressed in terms of logical block numbers. Thus, the device depicted in FIG. 13 is generally understood to be a storage disc, such as a hard disk drive. However, the invention is not so limited. The systems and methods described herein may also be applied to compact discs, floppy disks, tape drive systems, and other similar kinds of data storage devices.

In any case, it can generally be understood that the logical block name space can be subdivided into different sections where each of these sections has different kinds of performance characteristics. The performance characteristics of interest might include the rate in which data can be accessed from that portion of the disc, the reliability of that portion of the disc, and how long it can take to access that portion of the memory device (which can be particularly relevant to digital linear tape storage).

In one practice, the systems and methods described herein include a performance measurement system that is capable of scanning an individual device, such as the depicted storage device 10, and measuring certain characteristics to determine how the device should be subdivided into different performance classes. In one embodiment, the performance measurement system makes experimental read and write operations across portions of the LBN and uses the collected experimental data to determine the performance characteristics of different logical block areas within the LBN space. The measuring process may then determine from these measured characteristics whether or not a collection of logical blocks can be aggregated into a section, such as one of the depicted sections 12, 14, or 16 wherein the aggregate logical blocks have common performance characteristics of interest and thereby provide a subspace within the LBN space that may be associated with a particular level of performance. Obviously, those of skill in the art can select the granularity over which the LBN space is subdivided into different sections and the granularity selected will depend largely on the application at hand and the number of storage classes desired or needed for the application of interest. In other practices and embodiments, partitioning into performance regions will be determined and done at system design time, and fixed for a particular system design. That design process may involve experiment and measurement, but the product that results from the design process typically will not itself incorporate a performance measurement component. The embodiment and practice selected can turn on the application being addressed and the specifics of the product design. Doing measurement at "run time" may be useful if there will be widely varying configurations of the product, not all of which have been seen or analyzed in advance during the product design phase. Conversely, if product configurations are rigorously controlled and analyzed prior to approval, then the performance analysis may be done at that time and no measurement component is needed in the operational or delivered product.

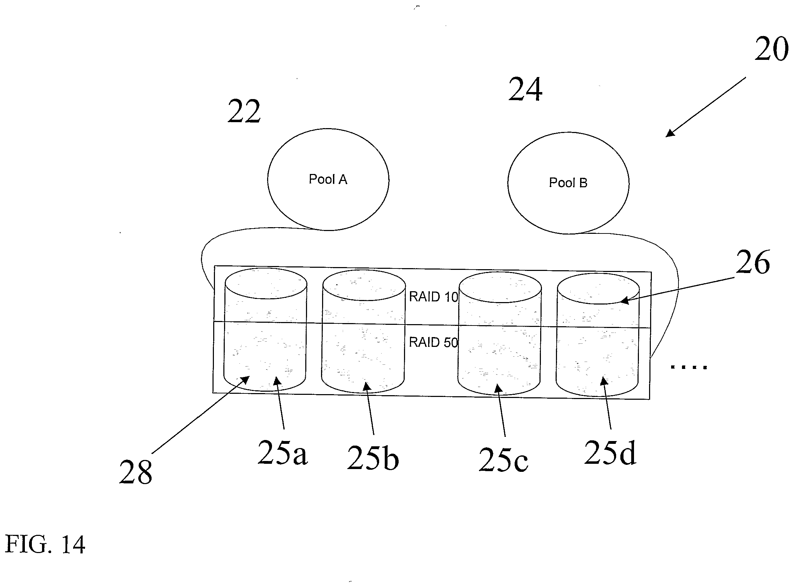

Turning now to FIG. 14, one RAID system 20 is depicted wherein the RAID system 20 provides differentiated storage pools sharing the same storage devices depicted as devices 25A through 25D. Specifically, FIG. 14 depicts a RAID storage system 20 that includes a pool A 22 and a pool B 24. As shown in this embodiment, pool A 22 is set up as a RAID 10 storage pool and pool B 24 is set up as a RAID 50 storage pool. As known to those of skill in the art, RAID is a term commonly employed for the acronym redundant ray of inexpensive (or independent) disks. A RAID array is a collection of drives which collectively act as a single storage system, which can tolerate a failure of a drive without losing data and which can operate independently of each other. Although there are different types of RAID systems, in general, the UC Berkeley term "RAID" defined six RAID levels. Each level is a different way to spread data across the multiple drives in the system, such as the multiple systems 25A through 25D. This technique provides a compromise between cost and speed. The different levels have different meanings and each level is typically optimized for a different use or application. For example, RAID level 0 is not redundant and splits data across the different drives 25A through 25D resulting in higher data through-put. Since no redundant information is stored, the performance is very good, but the failure of any disk in the array results in data loss. This level is commonly referred to as striping. RAID level 1 is commonly referred to as mirroring with two hard drives. This level provides redundancy by duplicating all the data from one drive onto another drive. The performance of level 1 array is slightly better than a single drive, but if either drive fails, no data is lost. RAID level 10, such as the depicted pool A 22 employs, is a dual level array that employs multiple RAID 1 (mirrored) sets into a single array. Data is striped across all mirrored sets. RAID 1 utilizes several drives, provides better performance, and each drive is typically duplicated or mirrored. RAID 50, as employed by pool B 24, is a dual level array that employs multiple RAID 5 levels into a single array. This will be understood that the RAID system 20 depicted in FIG. 14 employs the four storage devices 25A through 25D to support two different classes of storage, each of which has different performance characteristics and different performance levels.

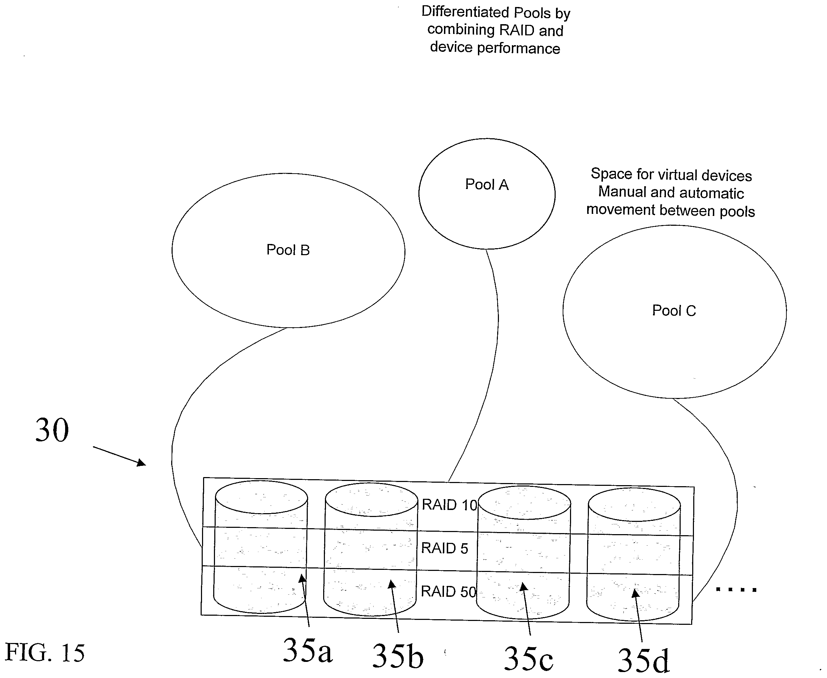

In one example system according to the invention, such as that depicted in FIG. 15, differentiated pools are created by combining the RAID levels depicted in FIG. 14 with the device performance variations depicted in FIG. 13. Specifically, FIG. 15 depicts a system 30 that comprises four storage devices 35A through 35D. Other storage devices may be added as needed. Similar to FIG. 13, the LBN space of the devices 35A through 35D is depicted abstractly as extending over the surface of the device and, as shown in FIG. 13, the devices 35A through 35D are subdivided into three subspaces, each LBN subspace being associated with a different performance level. Simultaneously, the system depicted in FIG. 15 associates different RAID levels with different performance subspaces. For example, the performance A LBN subspace is used to support a RAID 10 storage level, the performance B LBN subspace is employed to support a RAID 5 service level, and the performance C LBN subspace is employed to provide a RAID 50 performance level.

In the process of setting up the system 30, the storage system administrator can determine which of the performance LBN subspaces should be used to support a particular one of the RAID levels. Any suitable technique may be employed for choosing among the different subspaces. For example, if Region A is the region of the drives that has particularly good random access I/O performance, it will often be appropriate to allocate it to a RAID-10 set since RAID-10 is also characterized by good random access performance, especially random write performance; the characteristics of the two layers thus reinforce each other resulting in a "Pool A" that has excellent random write performance.

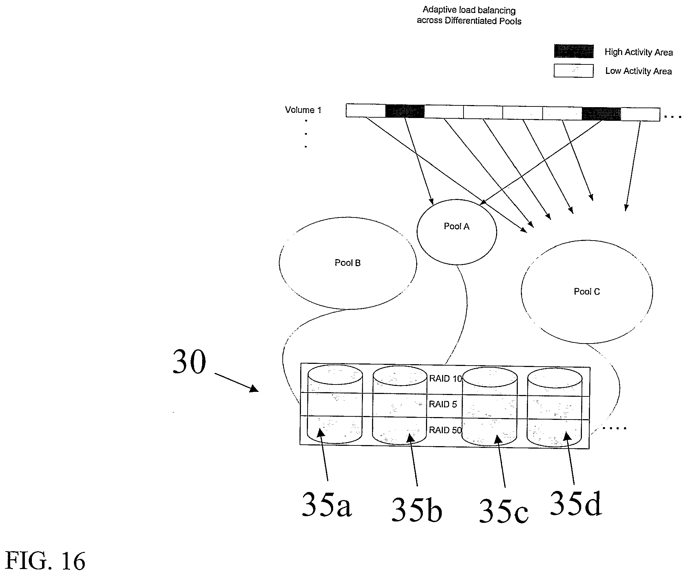

FIG. 16, depicts one example of an extent based or page based allocation operation of a storage service across the differentiated storage pools of the type depicted in FIG. 15. As depicted, the system 30 provides a Pool A that can store data that is frequently accessed. To this end, the Pool A subspace of the LBN is employed to support a RAID Level 10, which provides a certain amount of fault tolerance and provides respectable data throughput. By virtualizing the storage service across different classes of storage, while utilizing the same set of devices, as illustrated here, both optimal or substantially optimal performance and least physical device consumption may be obtained simultaneously. Multiple instances of the block storage service ("logical volumes") may be created, all sharing the same set of underlying differentiated storage pools. Each is allocated portions of the pools according to its performance requirements.

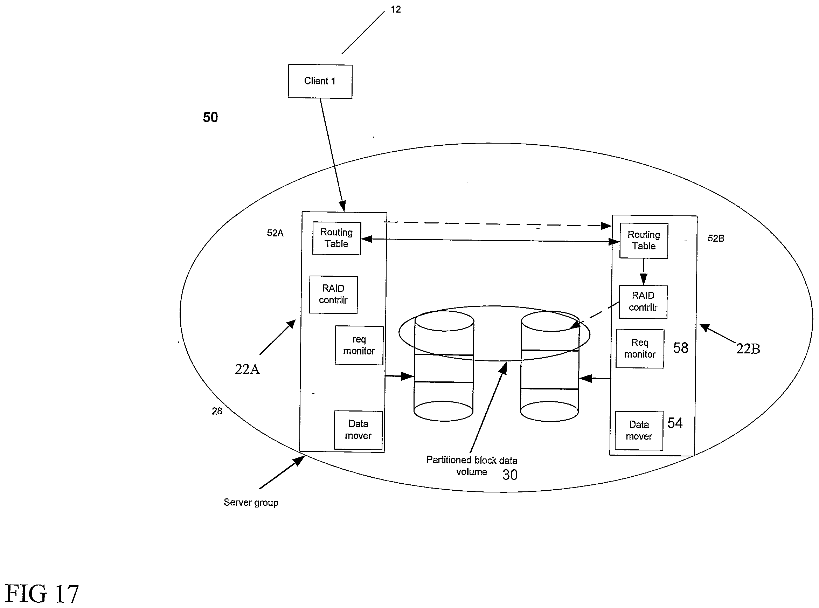

FIG. 17 depicts an optional embodiment wherein the system employs the aforedescribed adaptive storage block data distribution process for distributing blocks of data across the different partitions of the data volume (see also FIGS. 1 to 6). Each server 22A, 22B in the system 50 includes a routing table 52, a data mover process 54 and a request monitor process 58. The request monitor process 58 is capable of monitoring requests made to one of the servers 22 A or 22 B from the one or more clients 12 that are accessing the system 50.

The request may be associated with data blocks stored on a partition or somewhere on the volume of the storage device 30. The request monitor 58 can monitor the different requests that clients 12 make to the associated server or servers 22A, 22B. Additionally, the request monitor 58 may communicate with other request monitor processes 58 running on the different equivalent servers 22 on the system 50. In this way, the request monitor 58 can generate a global view of the requests being forwarded by clients 12 to the partitioned block data storage system 50. By sharing this information, each server 22A, 22B may, through its associated request monitor process 58, develop a global understanding of the requests being serviced by the block data storage system 50.

As further shown in FIG. 17, the data mover process 54 employs the information stored within the routing table 52 for the purpose of determining whether a more efficient or reliable arrangement of data blocks may be achieved. To this end, the data mover process 54 comprises a computer program that applies an algorithm to the data collected by the request monitors 58. The data mover process 54 applies an algorithm that reviews the current distribution of data blocks and considers the current client 12 demand for these data blocks when determining whether a more efficient allocation of data blocks is available. In the embodiment depicted, this algorithm can determine whether a particular data block is more suited for a storage class that is different from the class presently used. Thus the adaptive process can move data blocks between and among the different storage classes available on the system, such as on the system 30. In this way, the system 50 can achieve the optimal or substantially optimal storage performance for the data. The storage performance achieved may also be realized with systems that employ a single server, wherein the data mover process moves the data between different regions in the system.

Although FIGS. 13-17 depict exemplary systems as assemblies of functional block elements, it will be apparent to one of ordinary skill in the art that the systems and methods of the invention may be realized as computer programs or portions of computer programs that are capable of running on the servers to thereby configure the servers as systems according to the invention. Moreover, as discussed above, in certain embodiments, the systems of the invention may be realized as software components operating on a conventional data processing system such as a Unix workstation. In such embodiments, the system can be implemented as a C language computer program, or a computer program written in any high level language including C++, Fortran, Java or Basic. General techniques for such high level programming are known, and set forth in, for example, Stephen G. Kochan, Programming in C, Hayden Publishing (1983).

Moreover, the depicted system and processes may be constructed from conventional hardware systems and specially developed hardware is not necessary. For example, the depicted server group and/or the client systems can be any suitable computer system such as a PC workstation, a handheld computing device, a wireless communication device, or any other such device equipped with a network client capable of accessing a network server and interacting with the server to exchange information with the server. Optionally, the client and the server can rely on an unsecured communication path for accessing services on the remote server. To add security to such a communication path, the client and the server can employ a security system, such as any of the conventional security systems that have been developed to provide to the remote user a secured channel for transmitting data over the Internet. The servers may be supported by a commercially available server platform such as a Sun Sparc™ system running a version of the Unix operating system and running a server capable of connecting with, or exchanging data with, one of the clients.

While the invention has been disclosed in connection with the preferred embodiments shown and described in detail, various modifications and improvements thereon will become readily apparent to those skilled in the art.

## Claims

1. A system for block level data storage, comprising:
a plurality of servers (161, 162, 163, 32A, 32B-32N, 22) constituting a server group (16) on a data network (14) to which one or more clients (12) are connected, each server (161, 162, 163, 32A, 32B-32N, 22) being responsible for a portion of stored blocks and **characterized by**:
a means for detecting a request (34) from a client (12) for access to data in a stored block and for establishing a communication connection with the client(12), wherein the client (12) sees the server group (16) as a single server;
a data mover means (22A, 22B, 22C, 54) capable of communicating directly with a data mover means (22A, 22B, 22C, 54) on another of said servers (161, 162, 163, 32A, 32B-32N, 22) for coordinating movement of blocks between the servers (161, 162, 163, 32A, 32B-32N, 22);
a request monitor means (24A, 24B, 24C, 58) capable of monitoring requests (34) from the client (12), capable of communicating directly with a request monitor means (24A, 24B, 24C, 58) on another of said servers (161, 162, 163, 32A, 32B-32N, 22), and capable of generating a coordinated analysis of said client requests (34) for stored blocks; and
a routing table means capable of maintaining and tracking a location of different stored blocks and the server (161, 162, 163, 32A, 32B-32N, 22) that is responsible therefor using a routing table (165, 20A, 20B, 20C),
communicating with the routing table means on another of said servers (161, 162, 163, 32A, 32B-32N, 22) for maintaining a coordinated global list of servers (161, 162, 163, 32A, 32B-32N, 22) and stored blocks associated therewith, determine which server (161, 162, 163, 32A, 32B-32N, 22) is responsible for the stored blocks requested by the client (12), and forwarding the request (34) to the determined server so that the requested data in the stored block is returned to the client via the established communication connection.

2. The system according to claim 1, wherein
the request monitor means (24A, 24B, 24C, 58) determines a number of requests (34) received by the server (161, 162, 163, 32A, 32B-32N, 22) with which it is associated to determine a measure of request load carried by the server(161, 162, 163, 32A, 32B-32N, 22).

3. The system according to claim 1 or 2, wherein
the request monitor means (24A, 24B, 24C, 58) measures parameters selected from the group consisting of a number of clients (12) accessing a data volume, a number if I/O requests (34), and a measure of available storage.

4. The system according to one of the preceding claims, wherein
the request monitor means (24A, 24B, 24C, 58) identifies whether a group of blocks are accessed together at a frequency above a criterion.

5. The system according to one of the preceding claims, wherein
the data mover means operates (22A, 22B, 22C, 58) on data generated by the request monitor means (24A, 24B, 24C, 58) to determine a data block to move to a selected server (161, 162, 163, 32A, 32B-32N, 22) for improving performance.

6. The system according to one of the preceding claims, wherein
the data mover means (22A, 22B, 22C, 58) applies an adaptive block distribution algorithm to data generated by the request monitor means (24A, 24B, 24C, 58).

7. The system according to one of the preceding claims, wherein
the data mover means (22A, 22B, 22C, 58) includes a data striping algorithm for striping selected data blocks across a plurality of servers (161, 162, 163, 32A, 32B-32N, 22).

8. The system according to one of the preceding claims, wherein
the data mover means (22A, 22B, 22C, 58) includes a transaction means for monitoring a transfer of data blocks between servers.

9. The system according to claim 8, wherein
the transaction means includes an error log means for logging an error detected during the transfer of data blocks.

10. The system according to one of the preceding claims, wherein
the request monitor means (24A, 24B, 24C, 58) monitors requests (34) made of two or more data volumes.

11. The system according to one of the preceding claims, wherein
the data mover means (22A, 22B, 22C, 58) moves data blocks associated with two or more data volumes.

12. A method for providing block level data storage on a plurality of servers constituting a server group on a data network to which one or more clients are connected, each server being responsible for a portion of stored blocks and **characterized by**:
the step of detecting a request from a client for access to data in a stored block and for establishing a communication connection with the client, wherein the client sees the server group as a single server;
the step of coordinating movements of blocks between the servers by a data mover means capable of communicating directly with a data mover means on another of said servers;
the step of monitoring requests from the client by a request monitor means (24A, 24B, 24C, 58), the request monitor means (24A, 24B, 24C, 58) capable of communicating directly with a request monitor means (24A, 24B, 24C, 58) on another of said servers (161, 162, 163, 32A, 32B-32N, 22), and capable of generating a coordinated analysis of said client requests (34) for stored blocks; and
the step of maintaining and tracking a location of different stored blocks by a a routing table means and the server (161, 162, 163, 32A, 32B-32N, 22) that is responsible therefor using a routing table (165, 20A, 20B, 20C), communicating with the routing table means on another of said servers (161, 162, 163, 32A, 32B-32N, 22) for maintaining a coordinated global list of servers (161, 162, 163, 32A, 32B-32N, 22) and stored blocks associated therewith, determine which server (161, 162, 163, 32A, 32B-32N, 22) is responsible for the stored blocks requested by the client (12), and forwarding the request (34) to the determined server so that the requested data in the stored block is returned to the client via the established communication connection.

## Patentansprüche

1. System zur Datenspeicherung auf Blockebene, das Folgendes umfasst:
eine Vielzahl von Servern (161, 162, 163, 32A, 32B-32N, 22), die eine Servergruppe (16) auf einem Datennetzwerk (14) ausmachen, mit welchem ein oder mehrere Clients (12) verbunden sind, wobei jeder Server (161, 162, 163, 32A, 32B-32N, 22) für einen Abschnitt von gespeicherten Blöcken verantwortlich ist, und durch Folgendes gekennzeichnet ist:
ein Mittel zum Detektieren einer Anforderung (34) von einem Client (12) nach Zugang zu Daten in einem gespeicherten Block und nach Erstellen einer Kommunikationsverbindung mit dem Client (12), wobei der Client (12) die Servergruppe (16) als einzelnen Server sieht;
ein Datenbewegemittel (22A, 22B, 22C, 54), das dazu in der Lage ist, direkt mit einem Datenbewegemittel (22A, 22B, 22C, 54) auf einem anderen der Server (161, 162, 163, 32A, 32B-32N, 22) zum Koordinieren von Bewegung von Blöcken zwischen den Servern (161, 162, 163, 32A, 32B-32N, 22) zu kommunizieren;
ein Anforderungsüberwachungsmittel (24A, 24B, 24C, 58), das zum Überwachen von Anfragen (34) des Clients (12) in der Lage ist, zum direkten Kommunizieren mit einem Anforderungsüberwachungsmittel (24A, 24B, 24C, 58) auf einem anderen der Server (161, 162, 163, 32A-32N, 22) in der Lage ist, und zum Erzeugen einer koordinierten Analyse der ClientAnforderungen (34) für gespeicherte Blöcke in der Lage ist; und
ein Routingtabellenmittel, das dazu in der Lage ist, eine Position von unterschiedlichen gespeicherten Blöcken und des Servers (161, 162, 163, 32A, 32B-32N, 22), der dazu verantwortlich ist, unter Verwendung einer Routingtabelle (165, 20A, 20B, 20C) zu pflegen und zu überwachen, mit dem Routingtabellenmittel auf einem anderen der Server (161, 162, 163, 32A, 32B-32N, 22) zum Pflegen einer koordinierten globalen Liste von Servern (161, 162, 163, 32A, 32B-32N, 22) und damit zusammenhängenden gespeicherten Blöcken zu kommunizieren, zu bestimmen, welcher Server (161, 162, 163, 32A, 32B-32N, 22) für die gespeicherten Blöcke, die durch den Client (12) angefordert sind, verantwortlich ist, und die Anforderung (34) an den bestimmten Server weiterzuleiten, damit die angeforderten Daten in dem gespeicherten Block über die erstellte Kommunikationsverbindung an den Client zurückgeführt werden.

2. System nach Anspruch 1, wobei
das Anforderungsüberwachungsmittel (24A, 24B, 24C, 58) eine Anzahl von Anforderungen (34) bestimmt, die durch den Server (161, 162, 163, 32A, 32B-32N, 22) empfangen wurden, mit dem es zusammenhängt, um eine Messung von Anforderungslast, die durch den Server (161, 162, 163, 32A, 32B-32N, 22) getragen wird, zu bestimmen.

3. System nach Anspruch 1 oder 2, wobei
das Anforderungsüberwachungsmittel (24A, 24B, 24C, 58) Parameter misst, die ausgewählt sind aus der Gruppe bestehend aus einer Anzahl von Clients (12), die auf ein Datenvolumen zugreifen, einer Anzahl von E/A-Anforderungen (34) und einer Messung von verfügbarem Speicher.

4. System nach einem der vorhergehenden Ansprüche, wobei
das Anforderungsüberwachungsmittel (24A, 24B, 24C, 58) identifiziert, ob auf eine Gruppe von Blöcken zusammen mit einer Frequenz über einem Kriterium zugegriffen wird.

5. System nach einem der vorhergehenden Ansprüche, wobei
das Datenbewegemittel (22A, 22B, 22C, 58) an Daten, die durch das Anforderungsüberwachungsmittel (24A, 24B, 24C, 58) erzeugt werden, arbeitet (22A, 22B, 22C, 58), um einen Datenblock zu bestimmen, der zu einem ausgewählten Server (161, 162, 163, 32A, 32B-32N, 22) bewegt werden soll, um die Leistung zu verbessern.

6. System nach einem der vorhergehenden Ansprüche, wobei
das Datenbewegemittel (22A, 22B, 22C, 58) einen adaptiven Blockverteilungsalgorithmus auf Daten anwendet, die durch das Anforderungsüberwachungsmittel (24A, 24B, 24C, 58) erzeugt wurden.

7. System nach einem der vorhergehenden Ansprüche, wobei
das Datenbewegemittel (22A, 22B, 22C, 58) einen Daten-Striping-Algorithmus für Striping von ausgewählten Datenblöcken über eine Vielzahl von Servern (161, 162, 163, 32A, 32B-32N, 22) beinhaltet.

8. System nach einem der vorhergehenden Ansprüche, wobei
das Datenbewegemittel (22A, 22B, 22C, 58) ein Transaktionsmittel zum Überwachen einer Übertragung von Datenblöcken zwischen Servern beinhaltet.

9. System nach Anspruch 8, wobei
das Transaktionsmittel ein Fehlerprotokollmittel beinhaltet, um einen Fehler, der während der Übertragung von Datenblöcken detektiert wurde, zu protokollieren.

10. System nach einem der vorhergehenden Ansprüche, wobei
das Anforderungsüberwachungsmittel (24A, 24B, 24C, 58) Anforderungen (34) überwacht, die aus zwei oder mehr Datenvolumen hergestellt sind.

11. System nach einem der vorhergehenden Ansprüche, wobei
das Datenbewegemittel (22A, 22B, 22C, 58) Datenblöcke, die mit zwei oder mehr Datenvolumen zusammenhängen, bewegt.

12. Verfahren zum Bereitstellen von Datenspeicher auf Blockebene auf einer Vielzahl von Servern, die eine Servergruppe auf einem Datennetzwerk ausmachen, mit dem einer oder mehrere Clients verbunden sind, wobei jeder Server für einen Abschnitt von gespeicherten Blöcken verantwortlich ist und durch Folgendes gekennzeichnet ist:
den Schritt des Detektierens einer Anforderung von einem Client nach Zugang zu Daten in einem gespeicherten Block und nach Erstellen einer Kommunikationsverbindung mit dem Client, wobei der Client die Servergruppe als einen einzelnen Server ansieht;
den Schritt des Koordinierens von Bewegungen von Blöcken zwischen den Servern durch ein Datenbewegemittel, das dazu in der Lage ist, direkt mit einem Datenbewegemittel auf einem anderen der Server zu kommunizieren;
den Schritt des Überwachens von Anforderungen von dem Client durch ein Anforderungsüberwachungsmittel (24A, 24B, 24C, 58), wobei das Anforderungsüberwachungsmittel (24A, 24B, 24C, 58) dazu in der Lage ist, direkt mit einem Anforderungsüberwachungsmittel (24A, 24B, 24C, 58) auf einem anderen der Server (161, 162, 163, 32A, 32B-32N, 22) zu kommunizieren, und dazu in der Lage ist, eine koordinierte Analyse der Clientanforderungen (34) für gespeicherte Blöcke zu erzeugen; und
den Schritt des Pflegens und Nachverfolgens einer Position von unterschiedlichen gespeicherten Blöcken durch ein Routingtabellenmittel und den Server (161, 162, 163, 32A, 32B-32N, 22), der dafür verantwortlich ist, unter Verwendung einer Routingtabelle (165, 20A, 20B, 20C),
Kommunizieren mit dem Routingtabellenmittel auf einem anderen der Server (161, 162, 163, 32A, 32B-32N, 22) zum Beibehalten einer koordinierten globalen Liste von Servern (161, 162, 163, 32A, 32B-32N, 22) und gespeicherten Blöcken, die damit zusammenhängen, Bestimmen, welcher Server (161, 162, 163, 32A, 32B-32N, 22) für die gespeicherten Blöcke, die durch den Client (12) angefordert sind, verantwortlich ist, und Weiterleiten der Anforderung (34) an den bestimmten Server, damit die angeforderten Daten in dem gespeicherten Block über die erstellte Kommunikationsverbindung zu dem Client zurückgeführt werden.

## Revendications

1. Système pour un stockage de données en mode bloc, comprenant :
une pluralité de serveurs (161, 162, 163, 32A, 32B-32N, 22) constituant un groupe de serveurs (16) sur un réseau de données (14) auquel un ou plusieurs clients (12) sont connectés, chaque serveur (161, 162, 163, 32A, 32B-32N, 22) étant responsable d'une portion de blocs stockés et **caractérisé par** :
un moyen pour détecter une demande (34) provenant d'un client (12) pour accéder aux données dans un bloc stocké et établir une connexion de communication avec le client (12), dans lequel le client (12) voit le groupe de serveur (16) comme un serveur unique ;
un moyen de déplacement de données (22A, 22B, 22C, 54) apte à communiquer directement avec un moyen de déplacement de données (22A, 22B, 22C, 54) sur un autre desdits serveurs (161, 162, 163, 32A, 32B-32N, 22) pour coordonner le mouvement des blocs entre les serveurs (161, 162, 163, 32A, 32B-32N, 22) ;
un moyen de surveillance de demandes (24A, 24B, 24C, 58) apte à surveiller des demandes (34) provenant du client (12), apte à communiquer directement avec un moyen de surveillance de demandes (24A, 24B, 24C, 58) sur un autre desdits serveurs (161, 162, 163, 32A, 32B-32N, 22), et apte à générer une analyse coordonnée desdites demandes du client (34) pour des blocs stockés ; et
un moyen de table de routage apte à maintenir et tracer une position pour différents blocs stockés et le serveur (161, 162, 163, 32A, 32B-32N, 22) qui est responsable de cela utilisant une table de routage (165, 20A, 20B, 20C), communiquant avec le moyen de table de routage sur un autre desdits serveurs (161, 162, 163, 32A, 32B-32N, 22) pour maintenir une liste globale coordonnée de serveurs (161, 162, 163, 32A, 32B-32N, 22) et de blocs stockés qui y sont associés, déterminent quel serveur (161, 162, 163, 32A, 32B-32N, 22) est responsable des blocs stockés requis par le client (12), et transférer la demande (34) à un serveur déterminé pour que les données requises dans le bloc stocké soient retournées au client via la connexion de communication établie.

2. Système selon la revendication 1, dans lequel
le moyen de surveillance de demandes (24A, 24B, 24C, 58) détermine un nombre de demandes (34) reçues par le serveur (161, 162, 163, 32A, 32B-32N, 22) auquel il est associé pour déterminer une mesure de charge de demande effectuée par le serveur (161, 162, 163, 32A, 32B-32N, 22).

3. Système selon la revendication 1 ou 2, dans lequel
le moyen de surveillance de demandes (24A, 24B, 24C, 58) mesure les paramètres choisis dans le groupe comprenant un nombre de clients (12) accédant à un volume de données, un nombre de demandes E/S (34), et une mesure de stockage disponible.

4. Système selon l'une des revendications précédentes, dans lequel
le moyen de surveillance de demandes (24A, 24B, 24C, 58) identifie si un groupe de blocs sont accédés ensemble à une fréquence supérieure à un critère.

5. Système selon l'une des revendications précédentes, dans lequel
le moyen de déplacement de données opère (22A, 22B, 22C, 58) sur des données générées par le moyen de surveillance de demandes (24A, 24B, 24C, 58) pour déterminer un bloc de données à déplacer vers un serveur choisi (161, 162, 163, 32A, 32B-32N, 22) pour améliorer les performances.

6. Système selon l'une des revendications précédentes, dans lequel
le moyen de déplacement de données (22A, 22B, 22C, 58) applique un algorithme de distribution de bloc adaptatif aux données générées par le moyen de surveillance de demandes (24A, 24B, 24C, 58).

7. Système selon l'une des revendications précédentes, dans lequel
le moyen de déplacement de données (22A, 22B, 22C, 58) comprend un algorithme d'entrelacement des données pour entrelacer des blocs de données choisis sur une pluralité de serveurs (161, 162, 163, 32A, 32B-32N, 22).

8. Système selon l'une des revendications précédentes, dans lequel
le moyen de déplacement de données (22A, 22B, 22C, 58) comprend un moyen de transaction pour surveiller un transfert de blocs de données entre des serveurs.

9. Système selon la revendication 8, dans lequel le moyen de transaction comprend un moyen d'enregistrement d'erreur pour enregistrer une erreur détectée pendant le transfert des blocs de données.

10. Système selon l'une des revendications précédentes, dans lequel
le moyen de surveillance de demandes (24A, 24B, 24C, 58) surveille des demandes (34) faites de deux ou plusieurs volumes de données.

11. Système selon l'une des revendications précédentes, dans lequel
le moyen de déplacement de données (22A, 22B, 22C, 58) déplace des blocs de données associés à deux ou plusieurs volumes de données.

12. Procédé pour fournir un stockage de données en mode bloc sur une pluralité de serveurs constituant un groupe de serveurs sur un réseau de données auquel un ou plusieurs clients sont connectés, chaque serveur étant responsable d'une portion de blocs stockés et **caractérisé par** :
l'étape de détection d'une demande provenant d'un client pour accéder aux données dans un bloc stocké et pour établir une connexion de communication avec le client, dans lequel le client voit le groupe de serveurs comme un serveur unique ;
l'étape de coordination de mouvements de blocs entre les serveurs par un moyen de déplacement de données apte à communiquer directement avec un moyen de déplacement des données sur un autre desdits serveurs ;
l'étape de surveillance de demandes provenant du client par un moyen de surveillance de demandes (24A, 24B, 24C, 58), le moyen de surveillance de demandes (24A, 24B, 24C, 58) étant apte à communiquer directement avec un moyen de surveillance de demandes (24A, 24B, 24C, 58) sur un autre desdits serveurs (161, 162, 163, 32A, 32B-32N, 22), et étant apte à générer une analyse coordonnée desdites demandes du client (34) pour des blocs stockés ; et
l'étape de maintien et de traçage d'une position de différents blocs stockés par un moyen de table de routage et le serveur (161, 162, 163, 32A, 32B-32N, 22) qui est responsable de cela utilisant une table de routage (165, 20A, 20B, 20C), communiquant avec le moyen de table de routage sur un autre desdits serveurs (161, 162, 163, 32A, 32B-32N, 22) pour maintenir une liste globale coordonnée de serveurs (161, 162, 163, 32A, 32B-32N, 22) et de blocs stockés qui y sont associés, déterminent quel serveur (161, 162, 163, 32A, 32B-32N, 22) est responsable des blocs stockés requis par le client (12), et transférer la demande (34) à un serveur déterminé pour que les données requises dans le bloc stocké soient retournées au client via la connexion de communication établie.
